# EUROPÄISCHE PATENTANMELDUNG

(11) **EP 4 197 826 A1**
(43) Veröffentlichungstag der Anmeldung: **21.06.2023**
(21) Anmeldenummer: 22213065.0
(22) Anmeldetag: 13.12.2022
(51) Int. Cl.: B60D 1/06, B60D 1/48, B60D 1/54

(54) **ANHÄNGEKUPPLUNG FÜR KRAFTFAHRZEUGE**

(30) Priorität: 15.12.2021 DE 102021133348
(71) Anmelder: ACPS Automotive GmbH, 74379 Ingersheim (DE)
(72) Erfinder: Wisirenko, Pascal, 71735 Eberdingen (DE)
(74) Vertreter: Hoeger, Stellrecht & Partner Patentanwälte mbB

(57) **Zusammenfassung**

Um bei einer Anhängekupplung für Kraftfahrzeuge, umfassend eine Lagereinheit, welche einen Kugelhals trägt, der an einem ersten Ende mit der Lagereinheit verbunden ist und an einem zweiten Ende eine Kupplungskugel trägt, und eine die Lagereinheit tragende Haltebasis, welche insbesondere mittels eines an einer Fahrzeugkarosserie montierbaren Querträgers mit der Fahrzeugkarosserie verbindbar ist, die Masse der Haltebasis zu reduzieren, wird vorgeschlagen, dass die Haltebasis einen Montagekörper aufweist, der aus mindestens zwei miteinander verbundenen Formteilen aus Flachmaterial zusammengesetzt ist, und dass der Montagekörper einerseits einen in die Formteile eingeformten Montagebereich und andererseits mindestens einen außerhalb des Montagebereichs angeordneten in die Formteile eingeformten Versteifungsbereich bilden.

## Beschreibung

Die Erfindung betrifft eine Anhängekupplung für Kraftfahrzeuge, insbesondere Personenkraftfahrzeuge, umfassend eine Lagereinheit, welche einen Kugelhals trägt, der an einem ersten Ende mit der Lagereinheit verbunden ist und an einem zweiten Ende eine Kupplungskugel trägt und eine die Lagereinheit tragende Haltebasis, welche insbesondere mittels eines an einer Fahrzeugkarosserie montierbaren Querträgers mit der Fahrzeugkarosserie verbindbar ist.

Derartige Anhängekupplungen sind aus dem Stand der Technik bekannt, bei diesen Anhängekupplungen besteht die Notwendigkeit, die Masse der Haltebasis zu reduzieren, um dadurch auch letztlich die Kraftfahrzeugmasse positiv zu beeinflussen.

Diese Aufgabe wird bei einer Anhängekupplung der eingangs beschriebenen Art erfindungsgemäß dadurch gelöst, dass die Haltebasis einen Montagekörper aufweist, der aus mindestens zwei miteinander verbundenen Formteilen aus Flachmaterial zusammengesetzt ist, und dass der Montagekörper einerseits einen in die Formteile eingeformten Montagebereich und andererseits mindestens einen außerhalb des Montagebereichs angeordneten in die Formteile eingeformten Versteifungsbereich bildet.

Der Vorteil dieser Lösung ist darin zu sehen, dass durch die mindestens zwei Formteile aus Flachmaterial die Möglichkeit besteht den Montagekörper möglichst stabil auszubilden und andererseits die Masse desselben soweit wie möglich zu reduzieren.

Besonders vorteilhaft ist es hierbei, wenn im Montagebereich mindestens eines der Formteile mindestens eine Abstützfläche für die Lagereinheit bildet.

Hinsichtlich der Anordnung der Formteile hat es sich als vorteilhaft erwiesen, wenn diese auf einander gegenüberliegenden Seiten einer quer zum Querträger verlaufenden Mittelebene des Montagekörpers angeordnet sind.

Insbesondere ist es im Hinblick auf die vorteilhafte Herstellung der Formteile von Vorteil, wenn jedes der Formteile einstückig ausgebildet ist.

Eine besonders vorteilhafte Lösung sieht vor, dass jedes der Formteile einen sich auf der jeweiligen Seite einer Mittelebene des Montagekörpers zwischen Außenbereichen des Montagekörpers ausdehnenden, jedoch durch Umformung des Flachmaterials quer zu seiner Flächenausdehnung variierenden Konturverlauf aufweist.

Mit einem derartigen variierenden Konturverlauf zwischen den Außenbereichen des Montagekörpers lässt sich vorteilhafterweise die erforderliche Steifigkeit der Formteile erreichen.

Hierfür hat es sich als besonders vorteilhaft erwiesen, wenn in dem Konturverlauf von mindestens einem der Formteile der Montagebereich eingeformt ist.

Ferner ist es vorteilhaft, wenn in den Konturverlauf von mindestens einem der Formteile der mindestens eine Versteifungsbereich eingeformt ist.

Um die Lagereinheit optimal am Montagekörper fixieren zu können, ist vorzugsweise vorgesehen, dass im Montagebereich ein Durchlass zur teilweisen Aufnahme der Lagereinheit vorgesehen ist, welcher mindestens eines, insbesondere beide Formteile durchsetzt.

Insbesondere kann sich dabei die Lagereinheit in den Durchlass hinein erstrecken oder den Durchlass durchsetzen.

Hinsichtlich der Anordnung der Stützfläche relativ zu dem Durchlass ist vorzugsweise vorgesehen, dass die Stützfläche außerhalb des Durchlasses angeordnet ist.

Dabei kann die Stützfläche im jeweiligen Formteil auf einer oder auf gegenüberliegenden Seiten des Durchlasses vorgesehen sein.

Besonders vorteilhaft ist es, wenn die Stützfläche um den Durchlass herum verlaufend angeordnet ist.

Prinzipiell könnte der Durchlass rotationssymmetrisch zu einer Mittelachse ausgebildet sein.

Um vorteilhafterweise den Durchlass auch zur drehfesten Fixierung der Lagereinheit nutzen zu können, ist vorzugsweise vorgesehen, dass der Durchlass eine von einer Rotationssymmetrie zu einer Mittelachse desselben abweichende Form aufweist.

Insbesondere ist dabei vorgesehen, dass der Durchlass zur Aufnahme eines Abschnitts, insbesondere eines Lagerkörpers, der Lagereinheit ausgebildet ist.

Vorzugsweise wirkt dabei der vom Durchlass aufgenommene Abschnitt der Lagereinheit mit der von einer Rotationssymmetrie zu der Mittelachse abweichenden Form des Durchlasses zusammen, so dass dadurch bereits das Zusammenwirken zwischen dem Durchlass und dem an die Form des Durchlasses korrespondierend angepassten Abschnitt der Lagereinheit zu einer drehfesten Festlegung dieses Abschnitts der Lagereinheit relativ zum Montagekörper führt.

Hinsichtlich der Abstützung der Lagereinheit an dem Montagekörper sind die unterschiedlichsten Lösungen denkbar.

Beispielsweise ist eine punktuelle Abstützung der Lagereinheit denkbar.

Eine besonders stabile Verbindung zwischen der Lagereinheit und dem Montagekörper wird dadurch erreicht, dass die Lagereinheit mit einem Abstützelement an der Stützfläche anliegt.

Ferner ist bei einer Lösung vorgesehen, dass sich die Lagereinheit mindestens an einem der Formteile abstützt.

Besonders vorteilhaft ist es jedoch, wenn die Lagereinheit sich an jedem der Formteile abstützt um die von der Lagereinheit wirkenden Kräfte möglichst gleichmäßig in den Montagekörper einzuleiten, so dass diese insbesondere auf jedes der Formteile direkt einwirken.

Dies kann beispielsweise durch eine Abstützung der Lagereinheit über eine an jedem der Formteile vorgesehene Stützfläche erfolgen.

Alternativ oder ergänzend sieht eine andere vorteilhafte Lösung vor, dass die Lagereinheit sich an mindestens einem, insbesondere an jedem, der Formteile im Bereich des Durchlasses abstützt und somit auch eine vorteilhafte Abstützung der Lagereinheit an dem Montagekörper im Hinblick auf von der Lagereinheit zu übertragende Kippmomente erfolgt.

Zur Verbindung der Lagereinheit mit dem Montagekörper ist vorzugsweise vorgesehen, dass die Lagereinheit einen Lagerkörper aufweist, welcher in den Durchlass eingreift.

Vorzugsweise ist dabei der Lagerkörper so ausgebildet, dass dieser sich auf einer Seite des Montagekörpers mit einem Abstützkörper abstützt und auf einer gegenüberliegenden Seite des Montagekörpers mit einem Halteelement abstützt.

Zur Fixierung des Halteelements an dem Lagerkörper ist vorzugsweise vorgesehen, dass der Lagerkörper eine den Durchbruch durchsetzende Lagerhülse aufweist, welche an einer dem Abstützkörper gegenüberliegenden Seite einen, insbesondere über den Durchlass überstehenden, Haltefortsatz mit einer Halteaufnahme aufweist, an welcher das Halteelement fixierbar ist.

Besonders günstig ist es dabei, wenn das Halteelement und die Halteaufnahme derart zusammenwirkend ausgebildet sind, dass das Halteelement durch eine Relativbewegung zur Halteaufnahme in Richtung des Abstützelements verstellbar ist.

Beispielsweise könnte in diesem Zusammenhang die Halteaufnahme eine in axialer Richtung des Lagerkörpers variierende Kontur aufweisen, mit welcher das Halteelement zusammenwirkt.

Eine derartige Kontur könnte beispielsweise ein Gewinde sein, mit welchem das Halteelement mit einem Innengewinde zusammenwirkt.

Eine andere Möglichkeit sieht vor, dass die Halteaufnahme eine Nut ist, in welche das Halteelement mit Keilkörpern eingreift, wobei die Keilkörper mit zunehmendem Eingriff in die Nut in Richtung des Abstützelements bewegbar sind.

Mit einer derartigen Halteaufnahme und einem gemäß der vorstehenden Definition ausgebildeten Halteelement besteht die Möglichkeit, den Montagekörper, beispielsweise in den Montagebereichen zwischen dem Abstützelement und dem Halteelement einzuspannen und somit den Lagerkörper der Lagereinheit am Montagekörper, insbesondere durch Einspannen desselben zwischen das Abstützelement und das Halteelement, zu fixieren.

Ferner ist vorzugsweise vorgesehen, dass im Montagebereich, insbesondere um den Durchlass herum und im Abstand von diesem, mehrere beide Formteile durchsetzende Befestigungsdurchbrüche für Verbindungselemente zur Montage der Lagereinheit vorgesehen sind.

Hinsichtlich der Ausbildung der Lagereinheit wurden bislang keine näheren Ausführungen gemacht.

Die Lagereinheit könnte beispielsweise eine drehfeste Verbindung zwischen dem Montagekörper und dem Kugelhals herstellen.

In diesem Fall könnte die Lagereinheit als Einsteckaufnahme ausgebildet sein, in welche der Kugelhals lösbar einsteckbar ist.

Eine andere vorteilhafte Lösung sieht vor, dass die Lagereinheit als Schwenklagereinheit ausgebildet ist, an welcher der Kugelhals um eine Schwenkachse schwenkbar gelagert ist.

Dabei erfolgt insbesondere eine Schwenkbewegung des Kugelhalses zwischen einer Arbeitsstellung und einer Ruhestellung, wobei der Kugelhals in der Arbeitsstellung entgegen einer Fahrtrichtung über eine hintere Stoßfängereinheit des Kraftfahrzeugs übersteht und in der Ruhestellung zwischen der hinteren Stoßfängereinheit des Kraftfahrzeugs und der Fahrzeugkarosserie angeordnet ist und dabei von außen unsichtbar und geschützt positioniert ist.

Insbesondere ist im Fall einer schwenkbaren Lagerung des Kugelhalses vorgesehen, dass sich der Montagekörper und insbesondere auch die Mittelebene des Montagekörpers senkrecht zur Schwenkachse erstreckt.

Ein derartiger Verlauf des Montagekörpers erlaubt es insbesondere, den Kugelhals möglichst nahe an dem Montagekörper anzuordnen und somit kollisionsfrei zum Montagekörper zwischen der Arbeitsstellung und der Ruhestellung zu verschwenken.

Eine weitere vorteilhafte Lösung sieht vor, dass die Schwenklagereinheit den Durchlass durchsetzt und auf einer Seite des Durchlasses den Kugelhals schwenkbar lagert so wie auf der anderen Seite des Durchlasses eine Antriebseinheit für eine Verriegelung des Kugelhalses in der Arbeitsstellung und/oder der Ruhestellung und/oder für eine Durchführung der Schwenkbewegung um die Schwenkachse aufweist.

Diese Lösung hat den Vorteil, dass damit der Montagekörper relativ zur Schwenklagereinheit so positioniert werden kann, dass die auf den Kugelhals wirkenden und auf die Schwenklagereinheit übertragenden Kräfte optimal in den Montagekörper eingeleitet werden können.

Hinsichtlich der Verbindung der Formteile wurden bislang keine näheren Angaben gemacht.

So sieht eine vorteilhafte Lösung vor, dass die Formteile in dem mindestens einen Versteifungsbereich fest miteinander verbunden sind.

Eine derartige Verbindung erfolgt beispielsweise stoffschlüssig und/oder formschlüssig und/oder über Verbindungselemente wie Schrauben oder Nieten.

Hinsichtlich der Versteifung des Montagekörpers ist es besonders vorteilhaft, wenn der Montagekörper beiderseits des Montagebereichs einen Versteifungsbereich aufweist.

Die Versteifungsbereiche sind insbesondere dann besonders wirksam, wenn sie sich bis zu Außenbereichen des Montagekörpers erstrecken.

Vorzugsweise verlaufen daher die Versteifungsbereiche entlang von Außenbereichen des Montagekörpers.

Eine vorteilhafte Versteifung des Montagekörpers ist insbesondere dann erreichbar, wenn der Montagekörper in dem jeweiligen Versteifungsbereich relativ zum Montagebereich eine von einer Mittelebene des Montagekörpers weg verlaufende Auswölbung, gebildet von mindestens einem der Formteile, insbesondere von beiden Formteilen aufweist, das heißt, dass in dem Versteifungsbereich der Abstand zwischen den Formteilen größer ist als in dem Montagebereich, um dadurch eine steifere Gestaltung des Montagekörpers zu erreichen.

Besonders vorteilhaft sind die Versteifungsbereiche dann zu gestalten, wenn diese eingeformte Sicken oder Umkantungen von mindestens einem oder beiden Formteilen aufweisen.

Vorteilhafterweise ist vorgesehen, dass die Auswölbung des Montagekörpers durch voneinander weg verlaufende Sicken oder Umkantungen von mindestens einem der Formteile gebildet sind.

Besonders günstig ist es, wenn mindestens eines, insbesondere beide Formteile in dem jeweiligen Versteifungsbereich im Querschnitt mindestens eine, insbesondere mehrere stufenförmige Verprägungen des Flachmaterials aufweisen.

Dabei ist zur Stabilisierung des Montagebereichs zweckmäßigerweise vorgesehen, dass mindestens eine der stufenförmigen Verprägungen des Flachmaterials um den Montagebereich umlaufend ausgebildet ist.

Ferner ist vorteilhafterweise vorgesehen, dass sich mindestens eine der stufenförmigen Verprägungen des Flachmaterials nahe eines Außenbereichs des Montagekörpers erstreckt.

Ferner ist es zur Verbindung der Formteile im Versteifungsbereich von Vorteil, wenn die Formteile in mindestens einem Versteifungsbereich aneinander anliegende Verbindungssegmente aufweisen.

Vorzugsweise liegen die Verbindungssegmente an einem Außenbereich der Formteile und sind insbesondere einstückig an die Formteile angeformt.

Beispielsweise sind hierbei die Formteile im Bereich der Verbindungssegmente stoffschlüssig miteinander verbunden.

Alternativ oder ergänzend hierzu ist vorgesehen, dass die Formteile im Bereich der Verbindungssegmente formschlüssig miteinander verbunden sind.

Alternativ oder ergänzend ist vorgesehen, dass die Verbindungssegmente über Schrauben und/oder Nieten miteinander verbunden sind.

Hinsichtlich der Ausbildung der einzelnen Formteile ist vorzugsweise vorgesehen, dass zur Bildung des jeweiligen Versteifungsbereichs das Flachmaterial von mindestens einem der Formteile in dem jeweiligen Versteifungsbereich zumindest bereichsweise in einem größeren Abstand von dem anderen der Formteile verläuft als in dem Montagebereich.

Beispielsweise lässt sich dies dadurch realisieren, dass die Formteile in dem Versteifungsbereich mindestens eine Umformung aufweisen, durch welche das Flachmaterial der Formteile im Versteifungsbereich bereichsweise in einem größeren Abstand voneinander verläuft als im Montagebereich.

Beispielsweise ist dies dadurch zu realisieren, dass die Formteile in dem mindestens einen Versteifungsbereich Umformungen aufweisen, die dazu führen, dass das Flachmaterial mindestens eines der Formteile sich vom Flachmaterial des anderen der Formteile zumindest bereichsweise zunehmend entfernt.

Beispielsweise kann eine derartige Umformung des jeweiligen Formteils als vom anderen Formteil weg verlaufende Umkantung oder Aufkantung ausgebildet sein.

Eine weitere vorteilhafte Formstabilisierung des Montagekörpers lässt sich dadurch erreichen, dass die Formteile auf einer dem Querträger gegenüberliegenden Seite mindestens ein Verbindungssegment aufweisen, durch welches die Formteile fest miteinander verbunden sind.

Eine weitere Stabilisierung des Montagekörpers lässt sich dadurch erreichen, dass dieser auf einer zwischen Versteifungsbereichen liegenden Seite Halteflansche zur Verbindung mit dem Querträger der Anhängekupplung aufweist.

Insbesondere sind die Halteflansche dabei mit Aufnahmen für den Querträger versehen, wobei die Aufnahmen vorzugsweise formschlüssig und insbesondere auch noch ergänzend stoffschlüssig mit dem Querträger verbunden sind.

Damit ergibt sich durch die Verbindung des Montagekörpers mit dem Querträger eine zusätzliche Stabilisierung desselben.

Hinsichtlich der Anordnung der Formteile relativ zueinander wurden bislang keine näheren Angaben gemacht.

Grundsätzlich könnten die Formteile in den Montagebereichen aneinander anliegen.

So sieht eine vorteilhafte Lösung vor, dass die Formteile in dem Montagebereich im Abstand voneinander angeordnet sind, so dass sich auch im Montagebereich ein Abstand zwischen den entsprechenden Bereichen des Flachmaterials der Formteile ergibt.

Da insbesondere im Montagebereich eine optimale Krafteinleitung auf die Formteile erfolgen sollte ist vorzugsweise vorgesehen, dass die Formteile in den Montagebereichen durch zwischen diesen wirkende Abstützelemente im Abstand voneinander verlaufend gehalten und insbesondere relativ zueinander abgestützt sind.

Vorzugsweise ist dabei vorgesehen, dass im Montagebereich die Abstützelemente in einem Zwischenraum zwischen den Formteilen angeordnet sind und die Formteile relativ zueinander abstützen.

Eine Möglichkeit zur Ausbildung derartiger Abstützelemente ist die, dass die Abstützelemente einzelne Körper sind, die sich von einem Formteil zum anderen erstrecken.

Eine andere Möglichkeit ist die, dass die Abstützelemente aus Flachmaterial gebildete, übereinanderliegende plattenförmige Elemente, beispielsweise plattenförmige Einlegteile sind.

Eine weitere vorteilhafte Lösung sieht vor, dass die Abstützelemente als um den Durchlass herum verlaufende Ringkörper ausgebildet sind.

Besonders vorteilhaft ist es in diesem Fall, wenn die Abstützelemente eine mit dem Durchlass deckungsgleiche Ausnehmung aufweisen.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Anhängekupplung für Kraftfahrzeuge, umfassend eine Lagereinheit (20), welche einen Kugelhals (10) trägt, der an einem ersten Ende (12) mit der Lagereinheit (20) verbunden ist und an einem zweiten Ende (16) eine Kupplungskugel (18) trägt, und eine die Lagereinheit (20) tragende Haltebasis (30), welche insbesondere mittels eines an einer Fahrzeugkarosserie (F) montierbaren Querträgers (34) mit der Fahrzeugkarosserie (F) verbindbar ist, wobei die Haltebasis (30) einen Montagekörper (32) aufweist, der aus mindestens zwei miteinander verbundenen Formteilen (72, 74) aus Flachmaterial zusammengesetzt ist, und dass der Montagekörper (32) einerseits einen in die Formteile (72, 74) eingeformten Montagebereich (62) und andererseits mindestens einen außerhalb des Montagebereichs (62) angeordneten in die Formteile (72, 74) eingeformten Versteifungsbereich (64) bildet.
2. Anhängekupplung nach Ausführungsform 1, wobei im Montagebereich (62) mindestens eines der Formteile (72, 74) mindestens eine Stützfläche (64) für die Lagereinheit (20) bildet.
3. Anhängekupplung nach Ausführungsform 1 oder 2, wobei die zwei Formteile (72, 74) auf einander gegenüberliegenden Seiten einer quer zum Querträger (34) verlaufenden Mittelebene (76) des Montagekörpers (32) angeordnet sind.
4. Anhängekupplung nach einer der voranstehenden Ausführungsformen, wobei jedes der Formteile (72, 74) einstückig ausgebildet ist.
5. Anhängekupplung nach einer der voranstehenden Ausführungsformen, wobei jedes der Formteile (72, 74) einen sich auf der jeweiligen Seite einer Mittelebene (76) des Montagekörpers (32) zwischen Außenbereichen (70, 71) des Montagekörpers (32) ausdehnen, jedoch durch Umformung des Flachmaterials quer zu seiner Flächenausdehnung variierenden Konturverlauf aufweist.
6. Anhängekupplung nach Ausführungsform 5, wobei in den Konturverlauf von mindestens einem der Formteile (72, 74) der Montagebereich (62) eingeformt ist.
7. Anhängekupplung nach Ausführungsform 5 oder 6, wobei in dem Konturverlauf von mindestens einem der Formteile (72, 74) der mindestens eine Versteifungsbereich (66, 68) eingeformt ist.
8. Anhängekupplung nach einer der voranstehenden Ausführungsformen, wobei im Montagebereich (62) ein Durchlass (56) zur teilweisen Aufnahme der Lagereinheit (20) vorgesehen ist, welcher beide Formteile (72, 74) durchsetzt.
9. Anhängekupplung nach Ausführungsform 8, wobei die Stützfläche (64) im jeweiligen Formteil (72, 74) außerhalb des Durchlasses (56) angeordnet ist.
10. Anhängekupplung nach Ausführungsform 8 oder 9, wobei die Stützfläche (64) im jeweiligen Formteil (72, 74) um den Durchlass (56) herum verlaufend angeordnet ist.
11. Anhängekupplung nach einer der voranstehenden Ausführungsformen, wobei der Durchlass (56) eine von einer Rotationssymmetrie zu einer Mittelachse (80) desselben abweichende Form aufweist.
12. Anhängekupplung nach einer der Ausführungsformen 3 bis 11, wobei der Durchlass (56) zur Aufnahme eines Abschnitts (54) der Lagereinheit (20) ausgebildet ist.
13. Anhängekupplung nach einer der voranstehenden Ausführungsformen, wobei die Lagereinheit (20) mit Abstützelement (52) an der Stützfläche (64) anliegt.
14. Anhängekupplung nach einer der voranstehenden Ausführungsformen, wobei die Lagereinheit (20) sich an jedem der Formteile (72, 74) abstützt.
15. Anhängekupplung nach einer der voranstehenden Ausführungsformen, wobei die Lagereinheit (20) sich mindestens an einem, insbesondere an jedem der Formteile (72, 74) im Bereich des Durchlasses (56) abstützt.
16. Anhängekupplung nach einer der voranstehenden Ausführungsformen, wobei die Lagereinheit (20) einen Lagerkörper (50) aufweist, welcher in den Durchlass (56) eingreift.
17. Anhängekupplung nach Ausführungsform 16, wobei der Lagerkörper (50) sich auf einer Seite des Montagekörpers (32) mit einem Abstützkörper (52) abstützt und auf einer gegenüberliegenden Seite des Montagekörpers (32) mit einem Halteelement (226, 254) abstützt.
18. Anhängekupplung nach Ausführungsform 16 oder 17, wobei der Lagerkörper (50) eine den Durchlass (56) durchsetzende Lagerhülse (54) aufweist, welche an einer dem Abstützkörper (52) gegenüberliegende Seite einen, insbesondere über den Durchlass (56) überstehenden, Haltefortsatz (222, 222') mit einer Halteaufnahme (224, 234) aufweist, an welcher das Halteelement (226, 254) fixierbar ist.
19. Anhängekupplung nach Ausführungsform 18, wobei das Halteelement (226, 254) und die Halteaufnahme (224, 234) derart zusammenwirkend ausgebildet sind, dass das Halteelement (226, 254) durch eine Relativbewegung zur Halteaufnahme (224, 234) in Richtung des Abstützelements (52) verstellbar ist.
20. Anhängekupplung nach einer der Ausführungsformen 8 bis 19, wobei im Montagebereich (62), insbesondere um den Durchlass (56) herum und im Abstand von diesem mehrere beide Formteile (72, 74) durchsetzende Befestigungsdurchbrüche (172, 174) für Verbindungselemente (170) zur Montage der Lagereinheit (20) vorgesehen sind.
21. Anhängekupplung nach einer der voranstehenden Ausführungsformen, wobei die Lagereinheit (20) als Schwenklagereinheit ausgebildet ist, an welcher der Kugelhals (10) um eine Schwenkachse (22) schwenkbar gelagert ist.
22. Anhängekupplung nach Ausführungsform 21, wobei sich der Montagekörper (32) und insbesondere auch die Mittelebene (76) des Montagekörpers (32) senkrecht zur Schwenkachse (22) erstreckt.
23. Anhängekupplung nach Ausführungsform 21 oder 22, wobei die Schwenklagereinheit (20) den Durchlass (56) durchsetzt und auf einer Seite des Durchlasses (56) den Kugelhals (10) schwenkbar lagert sowie auf der anderen Seite des Durchlasses (56) eine Antriebseinheit (60) für eine Verriegelung des Kugelhalses (10) in der Arbeitsstellung (A) und/oder der Ruhestellung (R) und/oder für die Durchführung der Schwenkbewegung aufweist.
24. Anhängekupplung nach einer der voranstehenden Ausführungsformen, wobei die Formteile (72, 74) in dem mindestens einen Versteifungsbereich (66) fest miteinander verbunden sind.
25. Anhängekupplung nach einer der voranstehenden Ausführungsformen, wobei der Montagekörper (32) beiderseits des Montagebereichs (62) einen Versteifungsbereich (66) aufweist.
26. Anhängekupplung nach einer der voranstehenden Ausführungsformen, wobei die Versteifungsbereiche (66, 68) sich bis zu Außenbereichen des Montagekörpers (32) erstrecken.
27. Anhängekupplung nach einer der voranstehende Ausführungsformen, wobei die Versteifungsbereiche (66) entlang von Außenbereichen (70, 71) des Montagekörpers (32) verlaufen.
28. Anhängekupplung nach einer der voranstehenden Ausführungsformen, wobei die in dem jeweiligen Versteifungsbereich (66) der Montagekörper (32) relativ zum Montagebereich (62) eine von einer Mittelebene (76) des Montagekörpers (32) weg verlaufende Auswölbung, gebildet von mindestens einem der Formteile (72, 74), insbesondere von beiden Formteilen (72, 74), aufweist.
29. Anhängekupplung nach einer der voranstehenden Ausführungsformen, wobei mindestens eines der Formteile (72, 74) in dem mindestens einen Versteifungsbereich (66) eingeformte Sicken oder Umkantungen (86, 88, 96, 98) aufweist.
30. Anhängekupplung nach einer der voranstehenden Ausführungsformen, wobei die Auswölbung des Montagekörpers (32) durch die voneinander weg verlaufenden Sicken oder Umkantungen (86, 88, 96, 98) von mindestens einem, oder beiden Formteile (72, 74) gebildet ist.
31. Anhängekupplung nach einer der voranstehenden Ausführungsformen, wobei mindestens eines, insbesondere beide Formteile in dem jeweiligen Versteifungsbereich (66, 68) im Querschnitt mindestens eine, insbesondere mehrere, stufenförmige Verprägungen (86, 88, 92, 94, 96, 98, 102, 104) des Flachmaterials aufweisen.
32. Anhängekupplung nach einer der voranstehenden Ausführungsformen, wobei mindestens eine der stufenförmigen Verprägungen (86, 88, 92, 94, 96, 98, 102, 104) des Flachmaterials um den Montagebereich (62) umlaufend ausgebildet ist.
33. Anhängekupplung nach einer der voranstehenden Ausführungsformen, wobei sich mindestens eine der stufenförmigen Verprägungen des Flachmaterials nahe eines Außenbereichs (70, 71) des Montagekörpers (32) erstreckt.
34. Anhängekupplung nach einer der voranstehenden Ausführungsformen, wobei die Formteile (72, 74) in mindestens einem Versteifungsbereich (66, 68) aneinander anliegende Verbindungssegmente (112, 114, 116, 118 152) aufweisen.
35. Anhängekupplung nach einer der voranstehenden Ausführungsformen, wobei die Formteile (72, 74) im Bereich der Verbindungssegmente (112, 114, 152) stoffschlüssig miteinander verbunden sind.
36. Anhängekupplung nach Ausführungsform 34 oder 35, wobei die Formteile (72, 74) im Bereich der Verbindungssegmente (112, 114) formschlüssig miteinander verbunden sind.
37. Anhängekupplung nach einer der voranstehenden Ausführungsformen, wobei zur Bildung des jeweiligen Versteifungsbereichs (66) das Flachmaterial von mindestens einem der Formteile (72, 74) in dem jeweiligen Versteifungsbereich (66) zumindest bereichsweise in einem größeren Abstand von dem anderen der Formteile (72, 74) verläuft als in dem Montagebereich (62).
38. Anhängekupplung nach einer der voranstehenden Ausführungsformen, wobei die Formteile (72, 74) in dem mindestens einen Versteifungsbereich (66) mindestens eine Umformung (86, 88, 96, 98, 102, 104) aufweisen, durch welche das Flachmaterial der Formteile (72, 74) im Versteifungsbereich (66) bereichsweise in einem größeren Abstand voneinander verläuft als im Montagebereich (62).
39. Anhängekupplung nach einer der voranstehenden Ausführungsformen, wobei die Formteile (72, 74) im Versteifungsbereich (64) Umformungen (86, 88, 96, 98) aufweisen, die dazu führen, dass das Flachmaterial mindestens eines der Formteile (72, 74) sich vom Flachmaterial des anderen der Formteile (74, 72) zumindest bereichsweise zunehmend entfernt.
40. Anhängekupplung nach einer der voranstehenden Ausführungsformen, wobei die Formteile (72, 74) auf einer dem Querträger (34) gegenüberliegenden Seite mindestens ein Verbindungssegment (152) aufweisen, durch welches die Formteile (72, 74) fest miteinander verbunden sind.
41. Anhängekupplung nach einer der voranstehenden Ausführungsformen, wobei der Montagekörper (32) auf einer zwischen Versteifungsbereichen (66) liegenden Seite Halteflansche (144, 146) zur Verbindung mit dem Querträger (34) der Anhängekupplung aufweist.
42. Anhängekupplung nach einer der voranstehenden Ausführungsformen, wobei die Formteile (72, 74) in dem Montagebereich (62) mit Abstand relativ zueinander angeordnet sind.
43. Anhängekupplung nach Ausführungsform 42, wobei die Formteile (72, 74) in den Montagebereichen (62) durch zwischen diesen wirkende Abstützelemente (182) im Abstand voneinander verlaufend gehalten sind.
44. Anhängekupplung nach Ausführungsform 43, wobei in den Montagebereichen (62) die Abstützelemente (182) in einem Zwischenraum zwischen den Formteilen (72, 74) angeordnet sind und die Formteile (72, 74) relativ zueinander abstützen.
45. Anhängekupplung nach Ausführungsform 43 oder 44, wobei die Abstützelemente (182) einzelne Körper sind, die sich von einem Formteil (72,74) zum anderen erstrecken.
46. Anhängekupplung nach einer der Ausführungsformen 43 bis 45, wobei die Abstützelemente (182) aus Flachmaterial gebildete übereinanderliegende plattenförmige Elemente (184) sind.
47. Anhängekupplung nach einer der Ausführungsformen 43 bis 46, wobei die Abstützelemente (182) als um den Durchlass (56) herum geschlossen verlaufende Ringkörper ausgebildet sind.
48. Anhängekupplung nach einer der Ausführungsformen 43 bis 47, wobei die Abstützelemente (182) eine mit dem Durchlass (56) deckungsgleiche Ausnehmung aufweisen.

Weitere Merkmale und Vorteile sind Gegenstand der nachfolgenden Beschreibung sowie der zeichnerischen Darstellung einiger Ausführungsbeispiele.

In der Zeichnung zeigen:
- Fig. 1: eine Heckansicht eines Kraftfahrzeugs mit einer Anhängekupplung gemäß der vorliegenden Erfindung;
- Fig. 2: eine perspektivische Darstellung der erfindungsgemäßen Anhängekupplung mit Blick auf die Heckseite des Kraftfahrzeugs in Fahrtrichtung ohne Darstellung der Fahrzeugkarosserie und des Stoßfängers;
- Fig. 3: eine Draufsicht auf die erfindungsgemäße Anhängekupplung von oben in Richtung des Pfeils A in Fig. 2;
- Fig. 4: eine perspektivische Ansicht der erfindungsgemäßen Anhängekupplung mit Blick in Richtung der Schwenkachse gemäß dem Pfeil B in Fig. 3;
- Fig. 5: einen Schnitt längs Linie 5-5 in Fig. 3;
- Fig. 6: eine perspektivische Ansicht eines ersten Ausführungsbeispiels eines erfindungsgemäßen Montagekörpers mit Blick in Richtung des Pfeils C in Fig. 3;
- Fig. 7: eine perspektivische Darstellung des erfindungsgemäßen Montagekörpers mit Blick in Richtung des Pfeils D in Fig. 3;
- Fig. 8: einen Blick auf den erfindungsgemäßen Montagekörper in Richtung des Pfeils E in Fig. 6;
- Fig. 9: einen Blick auf den erfindungsgemäßen Montagekörper in Richtung des Pfeils F in Fig. 6;
- Fig. 10: einen horizontalen Schnitt beispielsweise längs Linie 10-10 Fig. 9 durch ein zweites Ausführungsbeispiel des Montagekörpers einer erfindungsgemäßen Anhängekupplung;
- Fig. 11: einen horizontalen Schnitt ähnlich Fig. 10 durch ein drittes Ausführungsbeispiel des Montagekörpers einer erfindungsgemäßen Anhängekupplung;
- Fig. 12: einen horizontalen Schnitt ähnlich Fig. 10 durch ein viertes Ausführungsbeispiel des erfindungsgemäßen Montagekörpers basierend auf dem zweiten Ausführungsbeispiel des Montagekörpers einer erfindungsgemäßen Anhängekupplung;
- Fig. 13: einen horizontalen Schnitt ähnlich Fig. 11 durch ein fünftes Ausführungsbeispiel des Montagekörpers basierend auf dem dritten Ausführungsbeispiel des Montagekörpers einer erfindungsgemäßen Anhängekupplung;
- Fig. 14: eine Draufsicht auf die Formteile zur Bildung eines sechsten Ausführungsbeispiels des Montagekörpers einer erfindungsgemäßen Anhängekupplung;
- Fig. 15: einen Schnitt ähnlich Fig. 5 durch ein siebtes Ausführungsbeispiel einer erfindungsgemäßen Anhängekupplung;
- Fig. 16: eine perspektivische Darstellung eines Halteelements des siebten Ausführungsbeispiels;
- Fig. 17: einen Schnitt ähnlich Fig. 5 durch ein achtes Ausführungsbeispiel einer erfindungsgemäßen Anhängekupplung und
- Fig. 18: eine perspektivische Darstellung eines Halteelements des achten Ausführungsbeispiels.

Ein erstes Ausführungsbeispiel einer erfindungsgemäßen Anhängekupplung AK für ein Kraftfahrzeug umfasst einen als Ganzes mit 10 bezeichneten Kugelhals, welcher mit einem ersten Ende 12 an einem Schwenklagerkörper 14 gehalten ist und an einem zweiten Ende 16 eine als Ganzes mit 18 bezeichnete Kupplungskugel trägt, an welcher eine Kupplungskugelaufnahme eines Anhängers fixierbar ist.

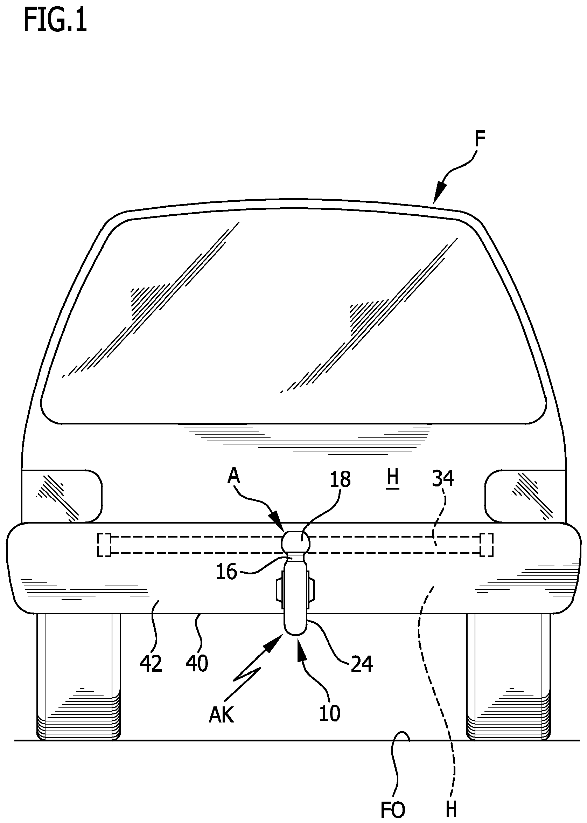

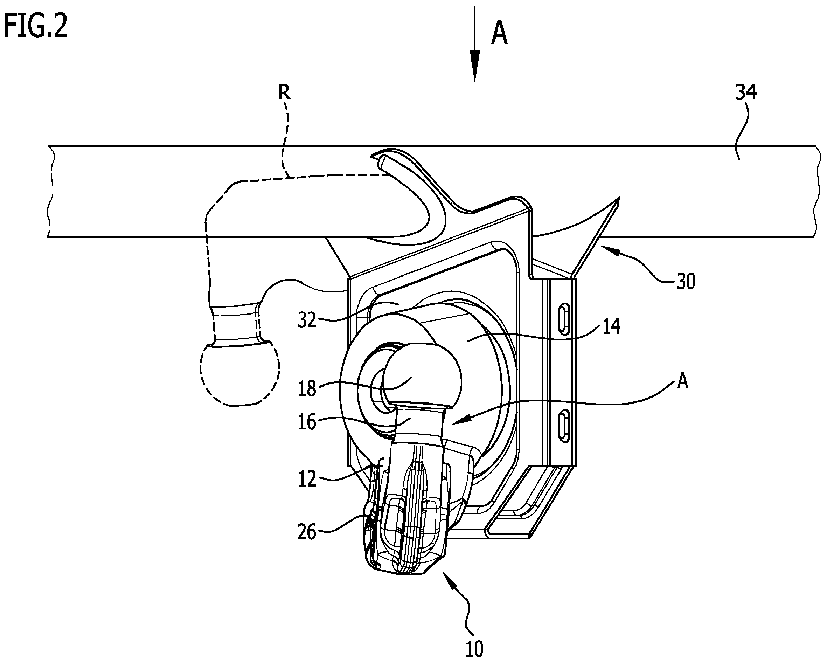

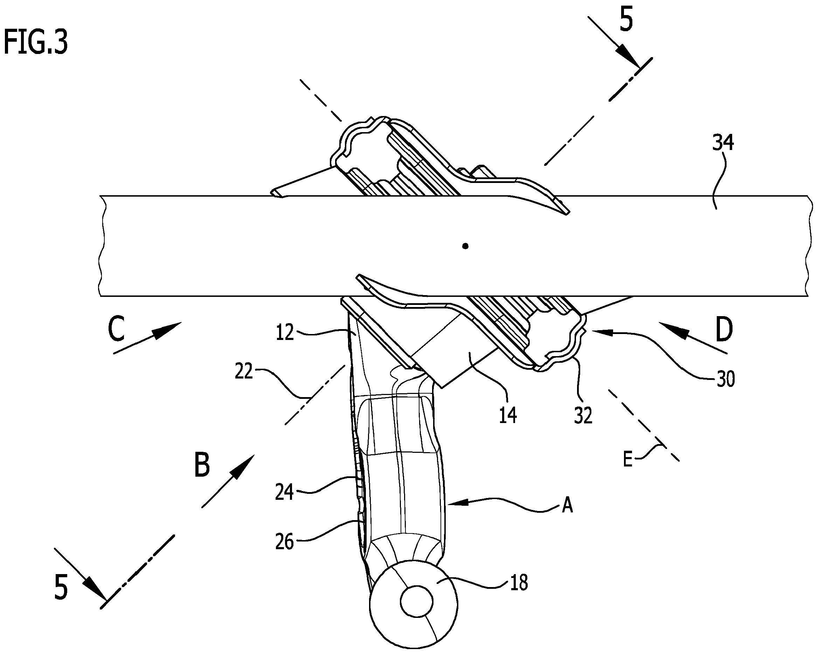

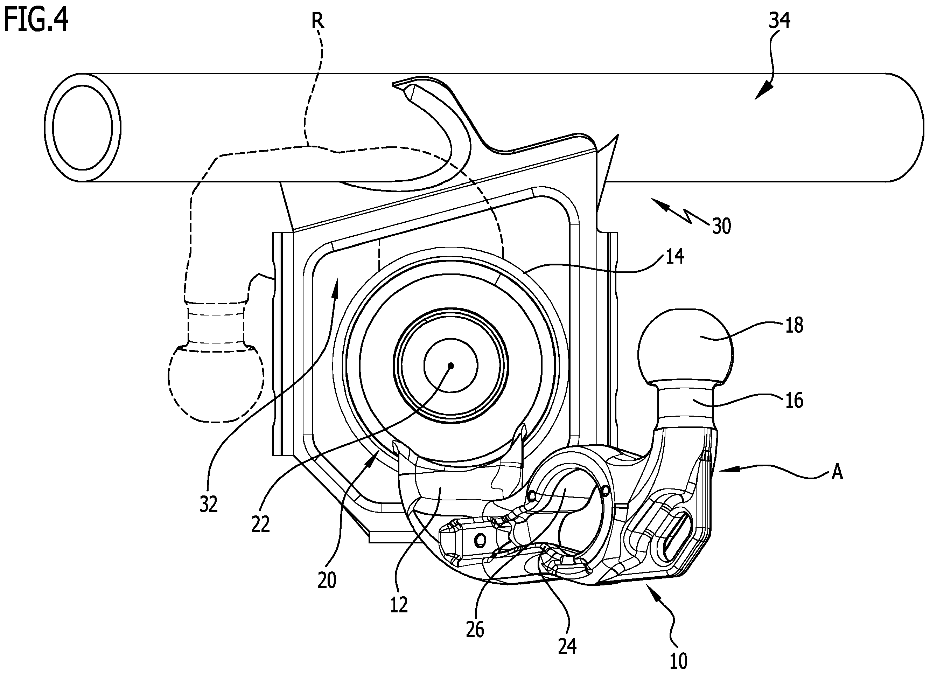

Der Kugelhals 10 ist dabei in den Fig. 1 bis 4 mit durchgezogenen Linien in einer Arbeitsstellung A dargestellt und in den Fig. 2 und 4 gestrichelt in einer Ruhestellung R dargestellt.

Der Schwenklagerkörper 14 ist durch eine als Ganzes mit 20 bezeichnete Schwenklagereinheit um eine Schwenkachse 22 relativ zu einer fahrzeugfesten Haltebasis 30 schwenkbar gelagert (Fig. 4), wobei die Haltebasis 30 vorzugsweise einen die Schwenklagereinheit 20 haltenden Montagekörper 32 aufweist, welcher sich beispielsweise näherungsweise parallel zu einer zur Schwenkachse 22 senkrechten Ebene E erstreckt und außerdem einen fahrzeugfesten Querträger 34 aufweist, welcher in bekannter Weise an einem Heckbereich H einer Fahrzeugkarosserie F befestigbar ist, und zwar so, dass die Schwenklagereinheit 20 und die Haltebasis 30 auf einer Fahrbahnoberfläche FO abgewandten Seite einer Unterkante 40 einer Stoßfängereinheit 42 liegen, und durch die Stoßfängereinheit 42 abgedeckt sind (Fig. 1).

In der in Fig. 1 bis 4 dargestellten Arbeitsstellung A untergreift der Kugelhals 10 mit einem sich an das erste Ende 12 anschließenden Abschnitt 24 die Unterkante 40 der hinteren Stoßfängereinheit 42, so dass das zweite Ende 16 und die Kupplungskugel 18 mitsamt einer Steckdosenaufnahme 26 auf einer der Fahrzeugkarosserie FK abgewandten Seite der hinteren Stoßfängereinheit 42 stehen, während in der Ruhestellung R sowohl die Schwenklagereinheit 20 als auch der gesamte Kugelhals 10 mitsamt der Kupplungskugel 18 von der hinteren Stoßfängereinheit 42 gegen Sicht von hinten abgedeckt sind.

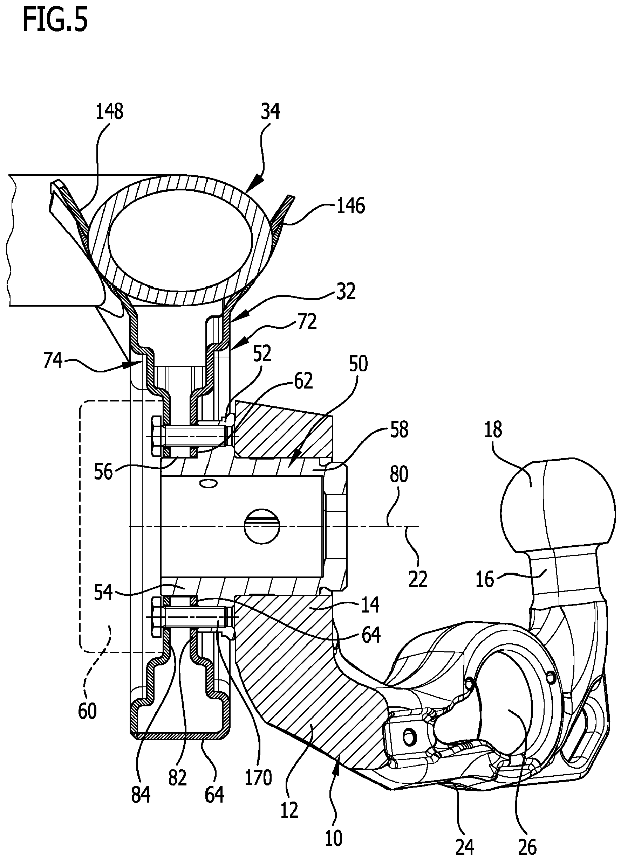

Die Schwenklagereinheit 20 umfasst, wie in Fig. 5 dargestellt, einen Lagerkörper 50, welcher einen Flansch 52 aufweist, der fest mit dem Montagekörper 32 verbindbar ist und eine sich ausgehend von dem Flansch 52 erstreckende Lagerhülse 54, welche sich in einen in dem Montagekörper 32 gebildeten Durchlass 56 hinein oder gegebenenfalls durch diesen hindurch erstreckt.

Ferner bildet der Lagerkörper 50 auf seiner dem Montagekörper 32 abgewandten Seite des Flansches 52 eine Lagerung für den Schwenklagerkörper 18, beispielsweise in Form einer Führungshülse 58, welche der Schwenklagerkörper 14 umgreift und mittels welcher der Schwenklagerkörper 14 um die Schwenkachse 22 schwenkbar geführt ist.

Ferner ist vorzugsweise auf einer der Führungshülse 58 gegenüberliegende Seite des Montagekörpers 32 eine Antriebseinheit 60 der Schwenklagereinheit 20 angeordnet, die beispielsweise ebenfalls an dem Lagerkörper 50 und/oder dem Montagekörper 32 gehalten ist.

Die Antriebseinheit 60 ist beispielsweise zum Antrieb einer Verriegelung des Schwenklagerkörpers 14 in der Arbeitsstellung und der Ruhestellung vorgesehen und kann insbesondere auch zum Antreiben der Schwenkbewegung um die Schwenkachse 22 dienen.

Vorzugsweise stützt sich dabei der Flansch 52 des Lagerkörpers 50 an einer Stützfläche 64 eines Montagebereich 62 des Montagekörpers 32 ab, wobei der Montagekörper 32 um den Montagebereich 62 umlaufend mit mehreren Versteifungsbereichen 66, 68 versehen ist, der die Formsteifigkeit des Montagekörpers 32 verbessert ist.

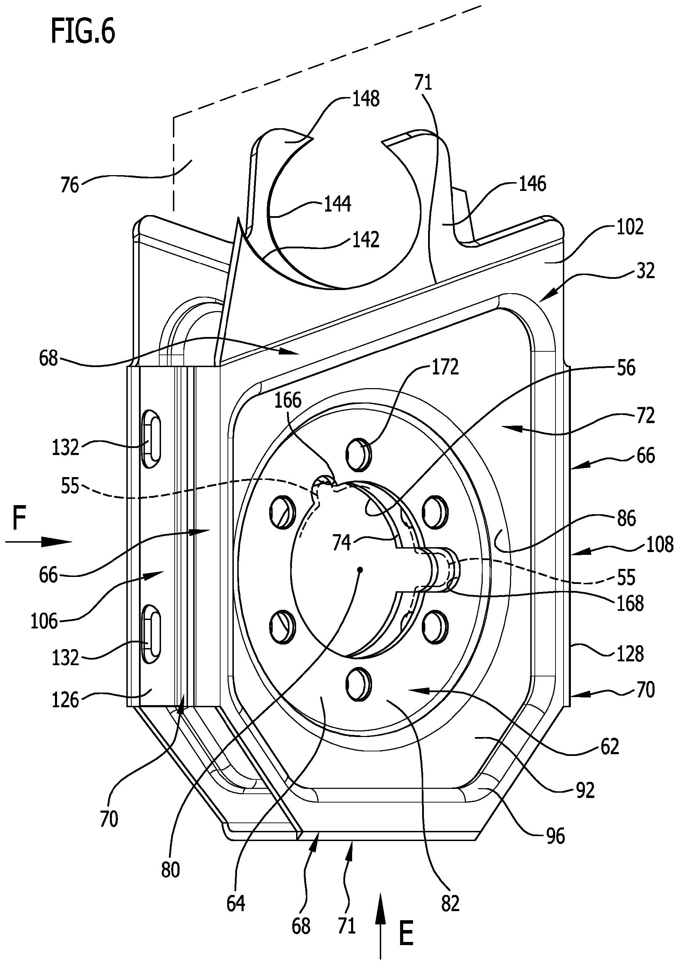

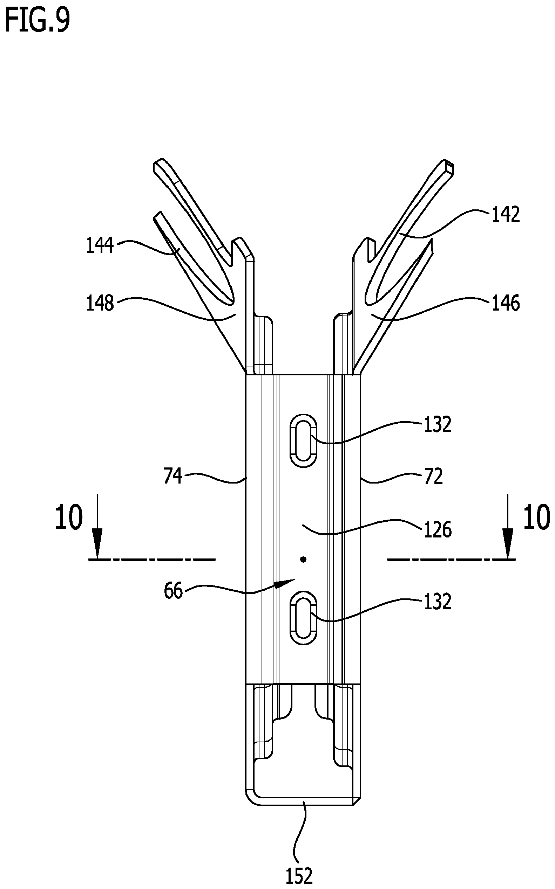

Bei dem in den Fig. 6 bis 9 dargestellten ersten Ausführungsbeispiel ist der Montagekörper 32 durch zwei Formteile 72, 74 gebildet, die sich zwischen Außenbereichen 70, 71 des Montagekörpers 32 mit einem Konturverlauf erstrecken, der bei der Herstellung der Formteile 72, 74 durch Umformung eines Flachmaterials quer zu seiner Flächenausdehnung variiert.

Dadurch sind in dem Montagekörper 32 der insbesondere zentral angeordnete Montagebereich 62 sowie zwischen diesem und den zur Fahrbahnoberfläche FO hin verlaufenden Außenbereichen 70 Versteifungsbereiche 66 sowie quer zu den Versteifungsbereichen 66 verlaufende Versteifungsbereiche 68 ausgebildet, von denen einer zwischen dem Montagebereich 62 und dem der Fahrbahnoberfläche FO zugewandten Außenbereich 71 liegt.

Dieser Konturverlauf mit dem Montagebereich 62 und den Versteifungsbereichen 66, 68 umfasst im Detail eines oder mehrere, der nachfolgenden anhand des ersten Ausführungsbeispiels erläuterten durch Umformungen geschaffenen Teilbereiche des Montagekörpers 32.

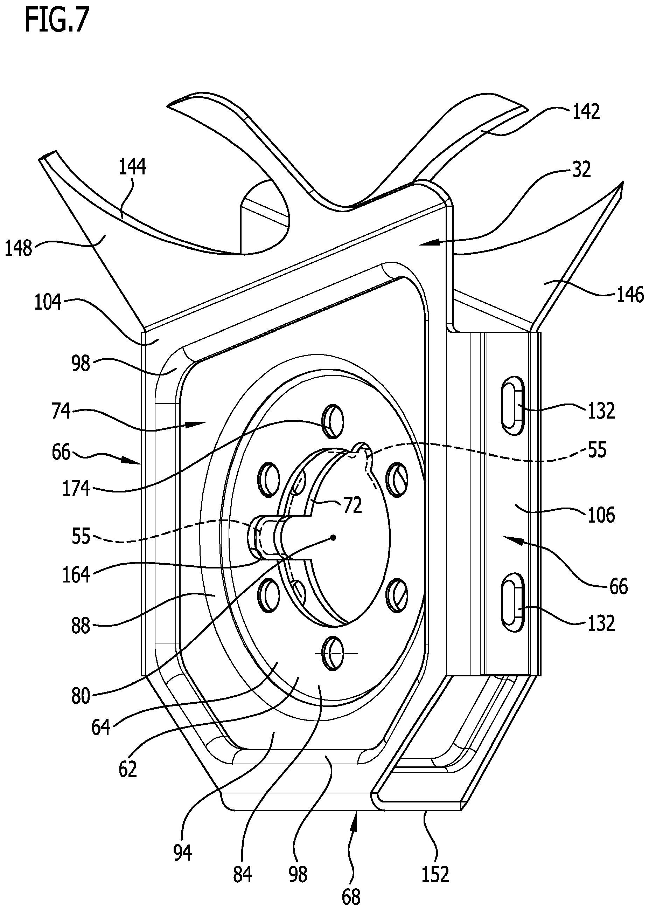

Wie beispielsweise in Fig. 6 und 7 bei einem ersten Ausführungsbeispiel des erfindungsgemäßen Montagekörpers 32 dargestellt, erstrecken sich die Formteile 72, 74 mit ihrem Konturverlauf auf gegenüberliegenden Seiten einer Mittelebene 76, die senkrecht zu einer insbesondere koaxial zu der Schwenkachse 22 verlaufenden Mittelachse 80 des Durchlasses 56 verläuft, ausgehend von dem Durchlass 56 des Montagekörpers 32 mit einem diesen umschließenden und um diesen herum verlaufenden Zentralbereich 82, 84 aufweist, der den Montagebereich 62 bildet.

Um diesen Zentralbereich 82, 84 herum weist jedes der Formteile 72, 74 eine ringförmige, sich von der Mittelebene 76 weg erstreckende Aufkantung 86, 88 auf, die vorzugsweise geschlossen, insbesondere ringförmig um den Durchlass 56 und im Abstand von diesem um diesen herum verläuft und an welche sich ein flacher Zwischenbereich 92, 94 anschließt, der sich ebenfalls ausgehend von der Aufkantung 86, 88 radial zu der Mittelachse 80 des Durchlasses 56 erstreckt und seinerseits wiederum in eine äußere Aufkantung 96, 98 übergeht, welche ebenfalls geschlossen um die Intermediäre Aufkantung 86 herum verläuft, beispielsweise jedoch nicht kreisförmig um die Mittelachse 80 verläuft, sondern beispielsweise in Form eines Vielecks.

Die äußere Aufkantung 96, 98 ist Teil eines äußeren Stabilisierungsbereichs 102, 104 des jeweiligen Formteils 72, 74, welcher beispielsweise, wie in Fig. 6 bis 9 dargestellt, einen sich an die äußere Aufkantung 96, 98 anschließenden äußeren Flachbereich 103, 105 umfasst.

Die Stabilisierungsbereiche 102, 104 bilden zur Verbindung der Formteile 72, 74 miteinander äußere Überlappungsbereiche 106 und 108, in welchen auf einander gegenüberliegenden Seiten in Richtung der Mittelebene 76 umgebogene Verbindungssegmente 112 und 114 des Formteils 72 sowie 116 und 118 des Formteils 74 miteinander überlappen und miteinander verbunden sind.

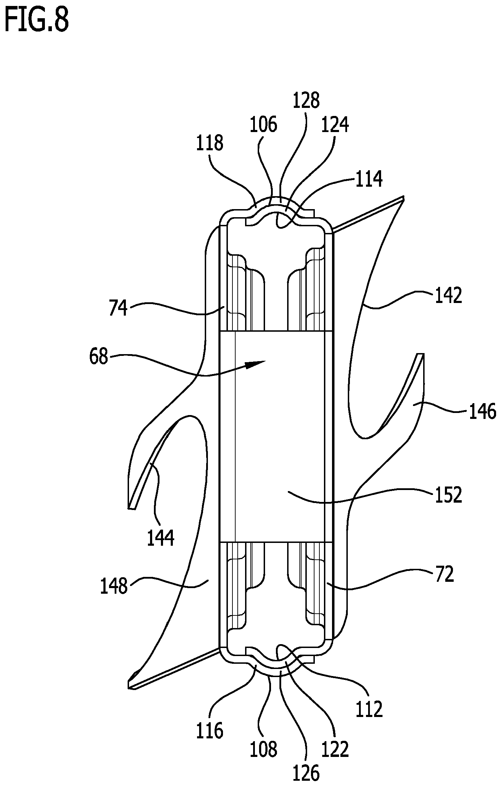

Vorzugsweise weisen die Verbindungssegmente 112 und 114 jeweils Sicken 122 und 124 auf, welche von Sicken 126 und 128 der Verbindungssegmente 116 und 118 übergriffen sind, wobei die Sicken 126 und 128 formschlüssig an den Sicken 122 und 124 anliegen (Fig. 8).

Vorzugsweise sind, wie in den Fig. 6 und 7 dargestellt, die in den Sicken 126 und 128 noch jeweils Schweißdurchbrüche 132 vorgesehen, welche ein randseitiges Verschweißen dieser Schweißdurchbrüche 132 mit der darunterliegenden Sicke 122 beziehungsweise 124 erlauben, so dass die Verbindungssegmente 112 und 114 des einen Formteils 72 mit den Verbindungssegmenten 116 und 118 des anderen Formteils 74 nicht nur formschlüssig über die Sicken 122 und 124 beziehungsweise 126 und 128 miteinander verbunden sind sondern zusätzlich auch noch in den Sickendurchbrüchen 132 stoffschlüssig im Bereich der Sicken 122 und 124 sowie 126 und 128 miteinander verbunden sind.

Vorzugsweise liegen zwischen den Überlappungsbereichen 106 und 108 außerdem an den Formteilen 72, 74 vorgesehene Aufnahmen 142 und 144 für den Querträger 34, wobei in Fig. 6 und 7 die Aufnahmen 142 und 144 für einen im Querschnitt runden Querträger 34 ausgebildet sind.

Es ist aber auch denkbar, die Aufnahmen 142 und 144 an beliebige Querschnittsformen des Querträgers 34 anzupassen.

Vorzugsweise liegen die Aufnahmen 142 und 144 dabei in sich ausgehend von den Stabilisierungsbereichen 102, 104 und zwischen den Überlappungsbereichen 106 und 108 verlaufenden Halteflanschen 146 und 148.

Ferner sind die Formteile 72 und 74 des Montagekörpers 32 auf ihrer den Halteflanschen 146 und 148 gegenüberliegenden Seite noch durch ein ebenfalls zwischen den Stabilisierungsbereichen 102 und 104 verlaufenden Verbindungssegment 152 miteinander verbunden, wobei das Verbindungssegment 152 beispielsweise an eines der Formteile 72, 74 angeformt und von diesem ausgehend umgebogen sein kann.

Das Verbindungssegment 152 kann aber auch durch jeweils ein in Richtung der Mittelebene 76 umgebogenes Randsegment jedes der Formteile 72, 74 gebildet sein, wobei in diesem Fall jeweils die von den jeweiligen Formteilen 72, 74 gebildeten Teilbereiche des Verbindungssegment 152 miteinander verschweißt sind

Durch die die ineinander übergehenden Versteifungsbereiche 66. 68 bildenden mehrfachen Aufkantungen 86 und 88 beziehungsweise 96 und 98 sowie die äußeren Stabilisierungsbereiche 102 und 104 weist jedes der Formteile 72, 74 eine um den jeweiligen Montagebereich 62 umlaufende, von der Mittelebene 76 weg verlaufende Auswölbung auf, wodurch jedes der Formteile 72, 74 selbst eine verbesserte Steifigkeit aufweist.

Die Steifigkeit der Formteile 72, 74 wird durch die Verbindung derselben in den Überlappungsbereichen 106 und 108 mittels den Verbindungssegmenten 112 bis 118 sowie dem Verbindungssegment 152 und den mit dem Querträger 34 verbundenen Halteflanschen noch zusätzlich signifikant verbessert.

Mit dieser konstruktiven Lösung des Montagekörpers 32 aus den mindestens zwei in der beschriebenen Art und Weise durch Formgebung der Formteile 72, 74 geschaffenen Versteifungsbereichen 66, 68 und der den Verbindungen zwischen den Formteilen 72, 74 wird eine insgesamt hohe Steifigkeit des Montagekörpers 32 erreicht, obwohl dieser lediglich aus zwei aus Flachmaterial gebildeten, beispielsweise durch Umformen und/oder Prägen hergestellten, Formteilen 72, 74 zusammengesetzt ist.

Zur Verbindung des Flansches 52 des Lagerkörpers 50 mit dem von dem Flansch 52 beaufschlagten Zentralbereich 82 oder 84 sind um den Durchbruch 56 herum in gleichen Winkelabständen in der jeweiligen Flachseite 82, 84 jeweils einander gegenüberliegende Befestigungsdurchbrüche 172 beziehungsweise 174 vorgesehen, die zur Aufnahme von Verbindungselementen 170, im einfachsten Fall von Schrauben dienen, so dass der Flansch 52 des jeweiligen Lagerkörpers 50 an dem Montagekörper 32 in den jeweiligen Montagebereich 62 durchsetzenden Verbindungselementen, beispielsweise Schrauben, fixierbar ist.

Darüber hinaus ist der Durchlass 56 vorzugsweise nicht kreisrund ausgebildet, sondern weist eine Abweichung von einer um die Mittelachse 80 herum verlaufenden kreisrunden Form auf, beispielsweise durch sich ausgehend von einer kreisrunden Form radial zur Mittelachse 80 erstreckende Ausschnitte 166, 168, so dass sich der Lagerkörper 50 mit an die Lagerhülse 54 angeformten Formschlussvorsprüngen 55 (in Fig. 6 und 7 gestrichelt dargestellt9 in diese Ausschnitte 166 und 168 hinein erstrecken kann und dadurch drehfest in dem Durchlass 56 des Montagekörpers 32 fixiert ist.

Die Montagebereiche 62 der Zentralbereiche 82, 84 sind zwar durch die Formgebung der Formteile 72, 74 und deren zusätzliche Verbindungen bereits mit einer hohen Formsteifigkeit versehen, die Montage des Flansches 52 mit die Befestigungsdurchbrüche 172, 174 durchsetzenden Verbindungselementen wirken jedoch mit hohen Druckkräften auf die Zentralbereiche 82, 84, so dass es sinnvoll ist, die Zentralbereiche 82, 84 der Formteile 72, 74 relativ zueinander abzustützen.

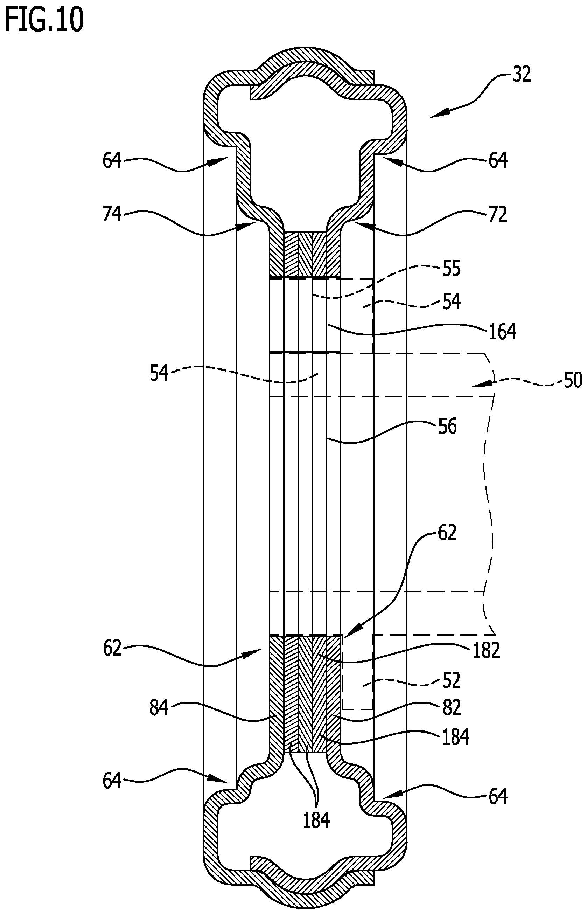

Hierzu ist beispielsweise, wie in Fig. 10 dargestellt, bei einem zweiten Ausführungsbeispiel vorgesehen, zwischen den Zentralbereichen 82, 84 noch eine Abstützung derselben relativ zueinander vorzusehen, beispielsweise durch eines oder mehrere Abstützelemente 182, an denen die Formteile 72, 74 mit ihren Zentralbereichen 82, 84 anliegen.

Im einfachsten Fall können die Abstützelemente 182 ebenfalls aus geformtem Flachmaterial ausgebildete Einlegeteile 184 sein und zwar so, dass mehrere der Einlegeteile 184 aufeinanderliegend zur Abstützung der Zentralbereiche 82, 84 dienen.

In Fig. 10 ist außerdem der Lagerkörper 50 gestrichelt dargestellt, wobei an der Lagerhülse 54 angeformte, in die Ausschnitte 168 eingreifende Formschlussvorsprünge 55 dargestellt sind.

Alternativ dazu ist bei einem dritten Ausführungsbeispiel vorgesehen, im Bereich der Befestigungsdurchbrüche 172, 174 für jeden Satz von einander gegenüberliegenden Befestigungsdurchbrüchen 172 und 174 als Abstützelement 182 einzelne oder auch zusammenhängende Stützkörper 186 einzusetzen, die die Zentralbereiche 82 und 84 relativ zueinander abstützen.

Die Stützkörper 186 können dabei beispielsweise Ringkörper oder Blöcke sein, deren Durchlässe deckungsgleich zu den jeweiligen Befestigungsdurchbrüchen 172, 174 angeordnet sind.

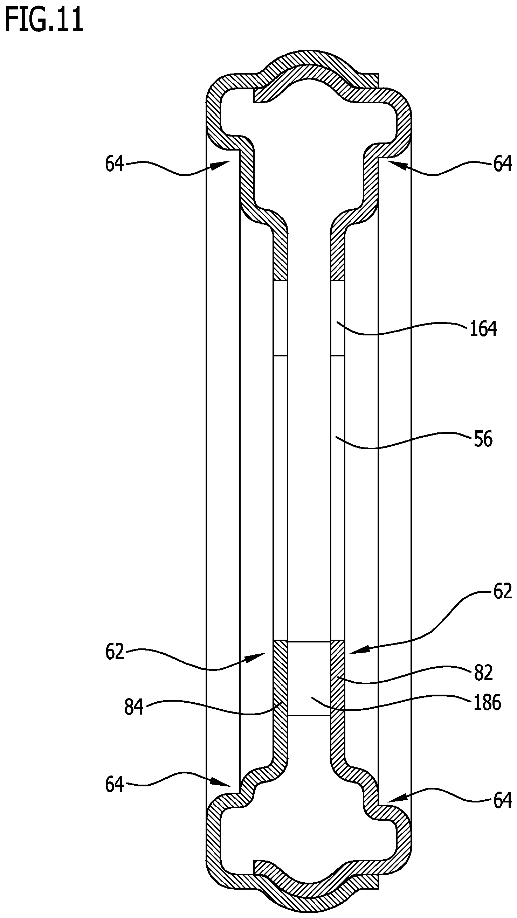

Die Abstützelemente 182, beispielsweise in Form der Einlegeteile 184 oder der Stützkörper 186, können, wie in den Fig. 10 und 11 dargestellt, beispielsweise durch stoffschlüssige Verbindung mit den Formteilen 72, 74 verbunden werden.

Eine derartige stoffschlüssige Verbindung wäre beispielsweise ein Verkleben oder ein Verschweißen, insbesondere ein punktförmiges oder bereichsweises Verschweißen.

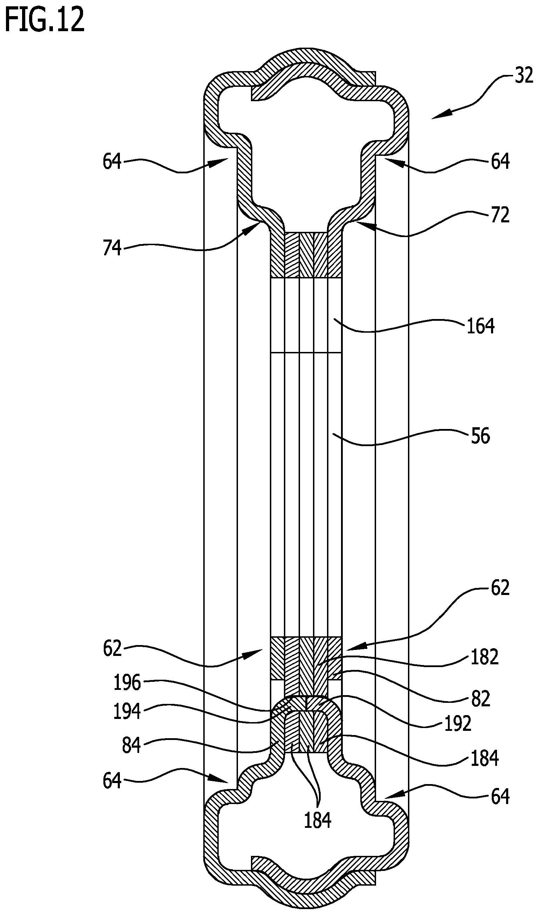

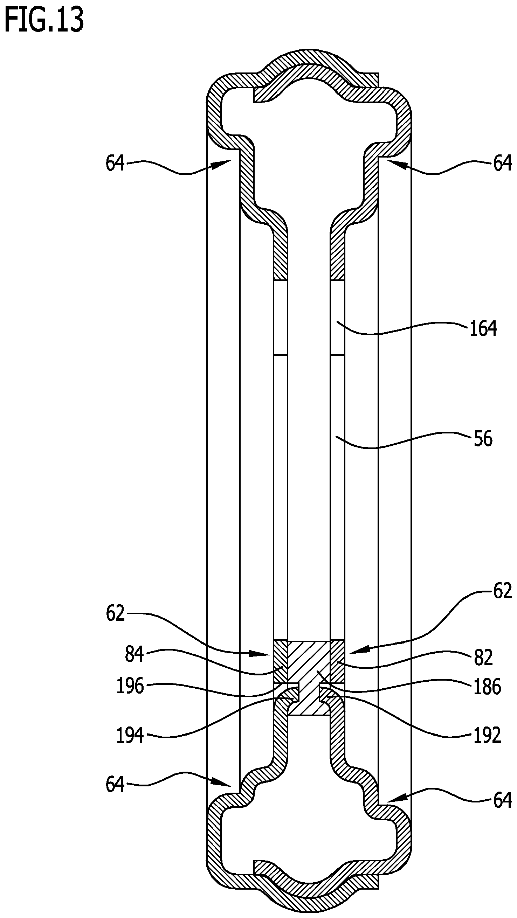

Es besteht aber auch bei einem vierten oder fünften Ausführungsbeispiel die Möglichkeit, insbesondere beim Zusammensetzen der Formteile 72, 74 mitsamt den Abstützelementen 182 zu dem Montagekörper 32, die Einlegeteile 184 oder die Stützkörper 186, wie in Fig. 12 beziehungsweise Fig. 13 dargestellt, durch aus den Formteilen 72, 74, insbesondere in den Zentralbereichen 82, 84, durch Ausbiegen hergestellte Haltefinger 192 beziehungsweise 194 zu fixieren, die in entsprechende Ausnehmungen 196 der Einlegeteile 184 beziehungsweise der Stützkörper 186 eingreifen.

Diese Haltefinger 192, 194 können dabei als Vorpositionierung für die Abstützelemente 182 beim Verbinden der Formteile 72, 74 dienen, wobei beispielsweise eine stoffschlüssige Verbindung mit den Formteilen 72, 74 noch hergestellt wird, oder auch zur endgültigen Positionierung, da durch die Verbindungselemente 170 zur Fixierung des Lagerkörpers 50 eine Kraftbeaufschlagung der Formteile 72, 74 in den Zentralbereichen 82, 84 erfolgt, die zu einer ergänzenden kraftschlüssigen Festlegung der Abstützelemente 182 ausreichend ist.

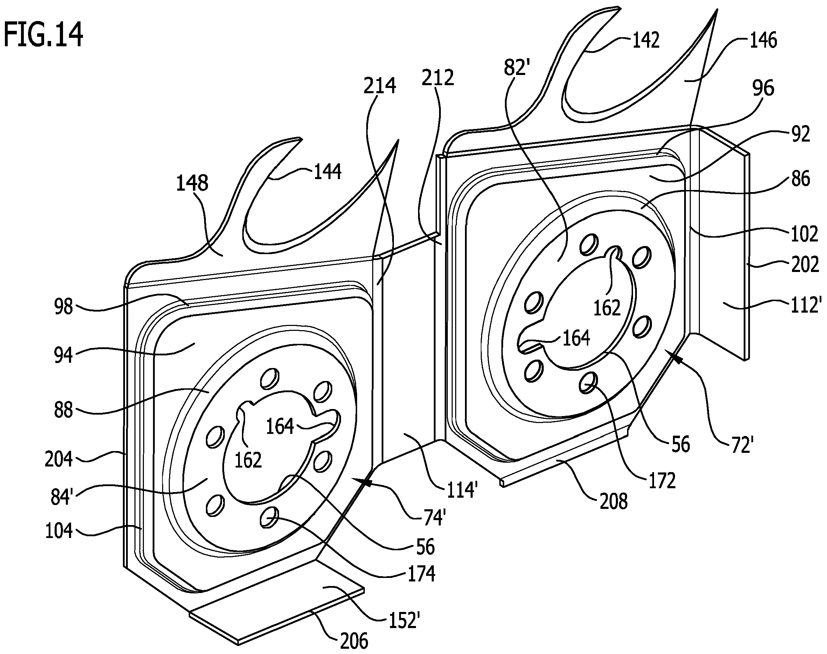

Bei einem sechsten vorteilhaften Ausführungsbeispiel, dargestellt in Fig. 14, ist vorgesehen, dass zur Herstellung des Montagekörpers 32' die Formteile 72' und 74' aus einem zusammenhängenden Stück Flachmaterial durch Umformen und Beschneiden hergestellt werden, so dass anstelle der äußeren Überlappungsbereiche 106 und 108 des ersten Ausführungsbeispiels jeweils nur ein Verbindungselement 112' und 114' vorgesehen ist, wobei das Verbindungselement 114' an die beiden Formteile 72', 74' angeformt ist und das Verbindungssegment 112' einseitig an das Formteil 72' angeformt ist und mit seinem freien Kantenbereich 202 mit einem dem Verbindungselement 114' gegenüberliegenden Kantenbereich 204 des Formteils 74' verbindbar ist, beispielsweise durch Schweißen.

In gleicher Weise weist das Verbindungssegment 152' einen dem Formteil 74' abgewandten freien Kantenbereich 206 auf, welcher mit einem Kantenbereich 208 des Formteils 72' ebenfalls beispielsweise durch Schweißen verbindbar ist.

Die zunächst aus dem Flachmaterial hergestellten Formteile 72', 74' werden an beiderseits des Verbindungssegments 114' vorgesehenen und dieses jeweils mit dem Formteil 72' beziehungsweise 74' verbindenden Biegekanten 212 und 214 umgebogen, so dass die Formteile 72' und 74' mit ihren Zentralbereichen 82' und 84' einander zugewandt stehen und beispielsweise im Wesentlichen parallel zueinander verlaufen, wobei dann in diesem Zustand die Verbindung zwischen den Kantenbereichen 202 und 204 und den Kantenbereichen 206 und 208 durch Schweißen hergestellt werden kann.

Im Übrigen sind die Formteile 72' und 74' in gleicher Weise ausgebildet wie die vorstehend beschriebenen Formteile 72 und 74 des ersten und zweiten Ausführungsbeispiels, so dass hinsichtlich der Ausbildung derselben, insbesondere des Konturverlaufs derselben, auf die voranstehende Beschreibung derselben im Rahmen der Ausführungsbeispiele vollinhaltlich Bezug genommen werden kann.

Alternativ zum Vorsehen von Verbindungselementen 170 zum Fixieren des Lagerkörpers 50 an dem Montagekörper 32 kann das Fixieren des Lagerkörpers 50 auch ohne die Befestigungsdurchbrüche 172 und 174 und die Verbindungselemente 170 erfolgen.

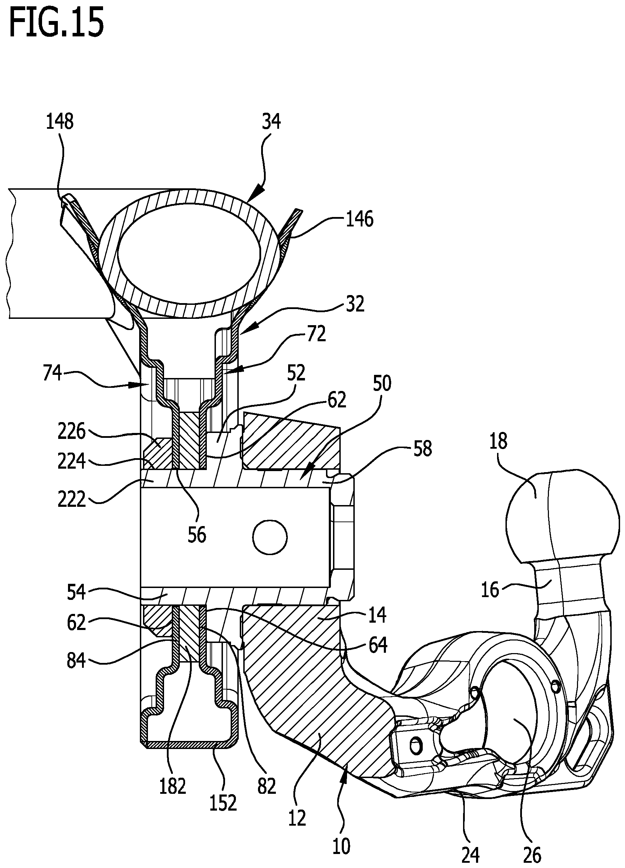

Ein siebtes Ausführungsbeispiel einer erfindungsgemäßen Anhängekupplung, dargestellt in Fig. 15, basiert beispielsweise auf einem Montagekörper 32 gemäß dem zweiten oder vierten Ausführungsbeispiel, wobei sich in diesem Fall die Lagerhülse 54 durch den Durchlass 56 hindurch erstreckt und auf einer dem Flansch 52 gegenüberliegenden Seite einen Haltefortsatz 222 bildet, mit welchem die Lagerhülse 54 über den Montagebereich 62 übersteht, der dem Montagebereich 62, welcher den Flansch 52 des Lagerkörpers 50 abstützt, gegenüberliegend am Haltekörper 32 vorgesehen ist.

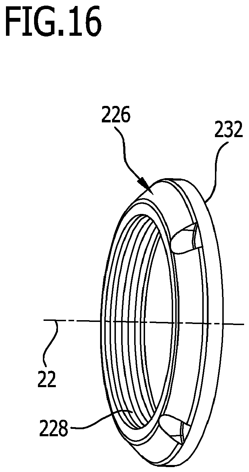

Der Haltefortsatz 222 ist mit einer Halteaufnahme 224 versehen, die beispielsweise als Außengewinde des Haltefortsatzes 222 ausgebildet ist, so dass an dem Haltefortsatz 222 als Halteelement ein Haltering 226 fixierbar ist, der beispielsweise, wie in Fig. 16 dargestellt, mit einem Innengewinde 228 versehen ist, so dass durch Aufschrauben des Halterings 226 auf die Halteaufnahme 224 dieser mit einer Stirnfläche 232 an dem Montagebereich 62, der dem den Flansch 52 abstützenden Montagebereich 62 gegenüberliegend am Montagekörper 32 angeordnet ist, abstützen kann.

Somit ist der Lagerkörper 50 durch den Flansch 52, welcher auf einer Seite des Montagekörpers 32 in dem Montagebereich 62 anliegt und durch den Haltering 226, welcher mit der Stirnfläche 232 an dem gegenüberliegenden Montagebereich 62 anliegt, relativ zum Montagekörper 32 fixierbar, wobei insbesondere in diesem Fall die Montagebereiche 62 durch die Abstützelemente 182 relativ zueinander abgestützt sind, und somit eine stabile Fixierung des Lagerkörpers 50 auch bei großen auf diesen einwirkenden Kräften gewährleisten.

Alternativ zum Vorsehen von der als Außengewinde ausgebildeten Aufnahme 224 und dem Innengewinde 228 des Halterings 226 besteht auch noch die Möglichkeit, andere einen Formschluss zwischen dem Haltering 226 und dem Haltefortsatz 222 ausbildende Formschlusselemente vorzusehen, welche durch Relativbewegung des Halterings 226 zum Haltefortsatz 222 ein Einspannen des Montagekörpers zwischen dem Flansch 52 und dem Haltering 226 ermöglichen.

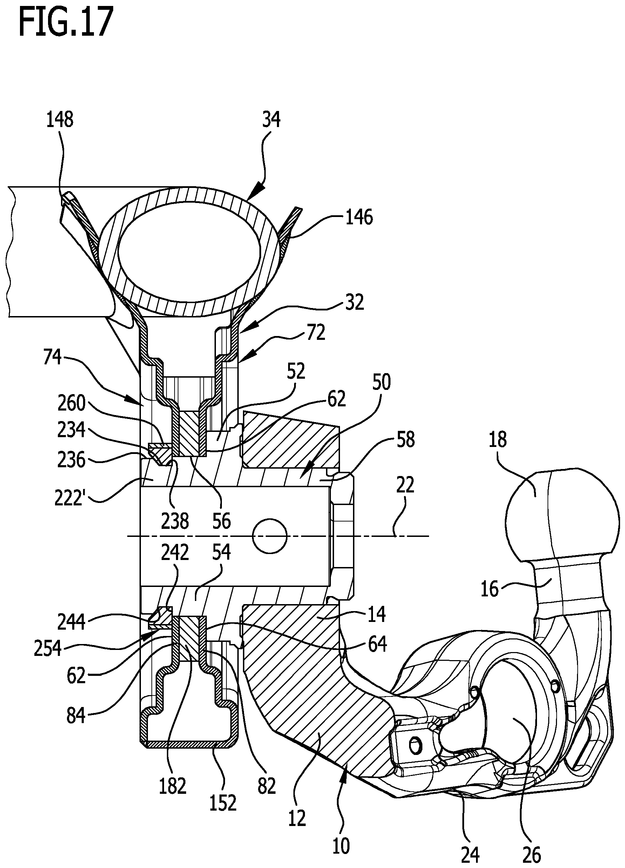

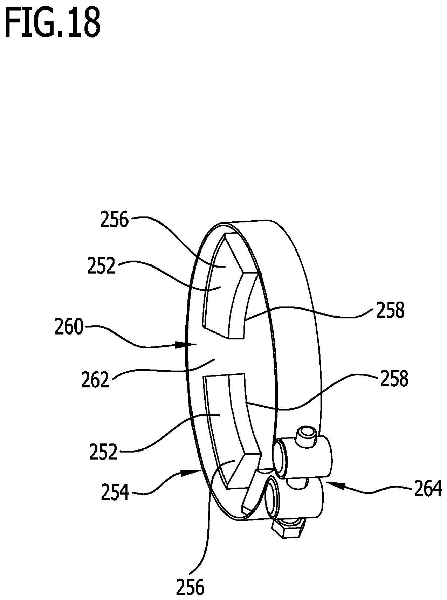

Bei einem achten Ausführungsbeispiel einer erfindungsgemäßen Anhängekupplung, dargestellt in den Fig. 17 und 18 umfasst der Haltefortsatz 222' eine Nut 234, welche sich ausgehend von einer Außenkontur 236 des Haltefortsatzes 222' in den Haltefortsatz 222' hinein, beispielsweise in Richtung der Schwenkachse 22, erstreckt und bis zu einem Nutgrund 238 verläuft.

Beispielsweise weist die Nut 234 eine dem Flansch 52 zugewandte Nutwand 242 auf, welche so weit in Richtung des Flansches 252 versetzt ist, dass diese bei fest am Montagekörper 32 montiertem Lagerkörper 50 zwischen den einander gegenüberliegenden Montagebereichen 62 des Montagekörpers 32 liegt.

Ferner verläuft eine der Nutwand 242 gegenüberliegende Nutwand 244 mit zunehmender Erstreckung von der Außenkontur 236 in Richtung des Nutgrunds 238 und in Richtung der Nutwand 242 und bildet somit eine Keilfläche, wobei sich bei dieser Ausgestaltung der Nut 234 diese ausgehend von der Außenkontur 236 des Haltefortsatzes 222' mit zunehmender Tiefe verengt.

In diese Nut sind, wie in Fig. 18 dargestellt, als Halteelemente Keilkörper 252 eines Halterings 254 einpressbar, wobei die Keilkörper 252 als Bogensegmente ausgebildet sind, und Keilflächen 256 aufweisen, die mit der keilförmig ausgebildeten Nutwand 244 zusammenwirken, so dass mit zunehmendem Einpressen der Keilkörper 252 in die Nut 234 die Keilkörper 252 mit den Keilflächen 256 gegenüberliegenden Druckflächen 258 an dem Montagebereich anlegbar sind, der dem den Flansch 52 abstützenden Montagebereich 62 des Montagekörpers 32 gegenüberliegend angeordnet ist.

Zum Einpressen der Keilkörper 252 in die Nut 234 ist ein als Ganzes mit 260 bezeichneter Spannring vorgesehen, welcher den Haltefortsatz 222' radial außenliegend umschließt und an dessen Innenseite 262 die Keilkörper 252 angeordnet sind, wobei der Spannring 260 mit einem Spannschloss 264 versehen ist, das einerseits die Möglichkeit eröffnet, den Spannring 260 insoweit zu öffnen, dass die Keilkörper 252 mit der Nut 234 in Eingriff bringbar sind und dann den Spannring 260 hinsichtlich seines Außenumfangs zu verkleinern und somit radial in Richtung der Nut 234 zu bewegen, so dass die Keilkörper 252 in die Nut 234 eingedrückt werden und durch das Zusammenwirken der Keilflächen 256 mit der jeweiligen Nutwand 244 sich in Richtung des Montagebereichs 62 bewegen, um den Montagekörper 32 mit den einander gegenüberliegenden Montagebereichen 62 zwischen dem Flansch 52 und den Keilkörpern 252 einzuspannen und somit den Lagerkörper 50 am Montagekörper 32 zu fixieren.

Dabei sind auch bei diesem Ausführungsbeispiel zwischen den Montagebereichen 62 die Abstützelemente 182 vorgesehen, die die Montagebereiche 62 des Montagekörpers 32 relativ zu einander abstützen.

## Patentansprüche

1. Anhängekupplung für Kraftfahrzeuge, umfassend eine Lagereinheit (20), welche einen Kugelhals (10) trägt, der an einem ersten Ende (12) mit der Lagereinheit (20) verbunden ist und an einem zweiten Ende (16) eine Kupplungskugel (18) trägt, und eine die Lagereinheit (20) tragende Haltebasis (30), welche insbesondere mittels eines an einer Fahrzeugkarosserie (F) montierbaren Querträgers (34) mit der Fahrzeugkarosserie (F) verbindbar ist,
**dadurch gekennzeichnet, dass** die Haltebasis (30) einen Montagekörper (32) aufweist, der aus mindestens zwei miteinander verbundenen Formteilen (72, 74) aus Flachmaterial zusammengesetzt ist, und dass der Montagekörper (32) einerseits einen in die Formteile (72, 74) eingeformten Montagebereich (62) und andererseits mindestens einen außerhalb des Montagebereichs (62) angeordneten in die Formteile (72, 74) eingeformten Versteifungsbereich (64) bildet.

2. Anhängekupplung nach Anspruch 1, **dadurch gekennzeichnet, dass** im Montagebereich (62) mindestens eines der Formteile (72, 74) mindestens eine Stützfläche (64) für die Lagereinheit (20) bildet.

3. Anhängekupplung nach Anspruch 1 oder 2, **dadurch gekennzeichnet, dass** die zwei Formteile (72, 74) auf einander gegenüberliegenden Seiten einer quer zum Querträger (34) verlaufenden Mittelebene (76) des Montagekörpers (32) angeordnet sind.

4. Anhängekupplung nach einem der voranstehenden Ansprüche, **dadurch gekennzeichnet, dass** jedes der Formteile (72, 74) einstückig ausgebildet ist.

5. Anhängekupplung nach einem der voranstehenden Ansprüche, **dadurch gekennzeichnet, dass** jedes der Formteile (72, 74) einen sich auf der jeweiligen Seite einer Mittelebene (76) des Montagekörpers (32) zwischen Außenbereichen (70, 71) des Montagekörpers (32) ausdehnenden, jedoch durch Umformung des Flachmaterials quer zu seiner Flächenausdehnung variierenden Konturverlauf aufweist, dass insbesondere in den Konturverlauf von mindestens einem der Formteile (72, 74) der Montagebereich (62) eingeformt ist, und/oder dass insbesondere in dem Konturverlauf von mindestens einem der Formteile (72, 74) der mindestens eine Versteifungsbereich (66, 68) eingeformt ist.

6. Anhängekupplung nach einem der voranstehenden Ansprüche, **dadurch gekennzeichnet, dass** im Montagebereich (62) ein Durchlass (56) zur teilweisen Aufnahme der Lagereinheit (20) vorgesehen ist, welcher beide Formteile (72, 74) durchsetzt, dass insbesondere die Stützfläche (64) im jeweiligen Formteil (72, 74) außerhalb des Durchlasses (56) angeordnet ist, dass insbesondere die Stützfläche (64) im jeweiligen Formteil (72, 74) um den Durchlass (56) herum verlaufend angeordnet ist, dass insbesondere der Durchlass (56) eine von einer Rotationssymmetrie zu einer Mittelachse (80) desselben abweichende Form aufweist, dass insbesondere der Durchlass (56) zur Aufnahme eines Abschnitts (54) der Lagereinheit (20) ausgebildet ist.

7. Anhängekupplung nach einem der voranstehenden Ansprüche, **dadurch gekennzeichnet, dass** die Lagereinheit (20) mit einem Abstützelement (52) an der Stützfläche (64) anliegt.

8. Anhängekupplung nach einem der voranstehenden Ansprüche, **dadurch gekennzeichnet, dass** die Lagereinheit (20) sich an jedem der Formteile (72, 74) abstützt.

9. Anhängekupplung nach einem der voranstehenden Ansprüche, **dadurch gekennzeichnet, dass** die Lagereinheit (20) sich mindestens an einem, insbesondere an jedem der Formteile (72, 74) im Bereich des Durchlasses (56) abstützt.

10. Anhängekupplung nach einem der voranstehenden Ansprüche, **dadurch gekennzeichnet, dass** die Lagereinheit (20) einen Lagerkörper (50) aufweist, welcher in den Durchlass (56) eingreift, dass insbesondere der Lagerkörper (50) sich auf einer Seite des Montagekörpers (32) mit einem Abstützkörper (52) abstützt und auf einer gegenüberliegenden Seite des Montagekörpers (32) mit einem Halteelement (226, 254) abstützt, dass insbesondere der Lagerkörper (50) eine den Durchlass (56) durchsetzende Lagerhülse (54) aufweist, welche an einer dem Abstützkörper (52) gegenüberliegende Seite einen, insbesondere über den Durchlass (56) überstehenden, Haltefortsatz (222, 222') mit einer Halteaufnahme (224, 234) aufweist, an welcher das Halteelement (226, 254) fixierbar ist, dass insbesondere das Halteelement (226, 254) und die Halteaufnahme (224, 234) derart zusammenwirkend ausgebildet sind, dass das Halteelement (226, 254) durch eine Relativbewegung zur Halteaufnahme (224, 234) in Richtung des Abstützelements (52) verstellbar ist.

11. Anhängekupplung nach einem der Ansprüche 6 bis 10, **dadurch gekennzeichnet, dass** im Montagebereich (62), insbesondere um den Durchlass (56) herum und im Abstand von diesem, mehrere beide Formteile (72, 74) durchsetzende Befestigungsdurchbrüche (172, 174) für Verbindungselemente (170) zur Montage der Lagereinheit (20) vorgesehen sind.

12. Anhängekupplung nach einem der voranstehenden Ansprüche, **dadurch gekennzeichnet, dass** die Lagereinheit (20) als Schwenklagereinheit ausgebildet ist, an welcher der Kugelhals (10) um eine Schwenkachse (22) schwenkbar gelagert ist, dass insbesondere sich der Montagekörper (32) und insbesondere auch die Mittelebene (76) des Montagekörpers (32) senkrecht zur Schwenkachse (22) erstreckt, dass insbesondere die Schwenklagereinheit (20) den Durchlass (56) durchsetzt und auf einer Seite des Durchlasses (56) den Kugelhals (10) schwenkbar lagert sowie auf der anderen Seite des Durchlasses (56) eine Antriebseinheit (60) für eine Verriegelung des Kugelhalses (10) in der Arbeitsstellung (A) und/oder der Ruhestellung (R) und/oder für die Durchführung der Schwenkbewegung aufweist.

13. Anhängekupplung nach einem der voranstehenden Ansprüche, **dadurch gekennzeichnet, dass** die Formteile (72, 74) in dem mindestens einen Versteifungsbereich (66) fest miteinander verbunden sind, dass insbesondere der Montagekörper (32) beiderseits des Montagebereichs (62) einen Versteifungsbereich (66) aufweist und/oder dass insbesondere die Versteifungsbereiche (66, 68) sich bis zu Außenbereichen des Montagekörpers (32) erstrecken und/oder dass insbesondere die Versteifungsbereiche (66) entlang von Außenbereichen (70, 71) des Montagekörpers (32) verlaufen.

14. Anhängekupplung nach einem der voranstehenden Ansprüche, **dadurch gekennzeichnet, dass** die in dem jeweiligen Versteifungsbereich (66) der Montagekörper (32) relativ zum Montagebereich (62) eine von einer Mittelebene (76) des Montagekörpers (32) weg verlaufende Auswölbung, gebildet von mindestens einem der Formteile (72, 74), insbesondere von beiden Formteilen (72, 74), aufweist und/oder dass insbesondere mindestens eines der Formteile (72, 74) in dem mindestens einen Versteifungsbereich (66) eingeformte Sicken oder Umkantungen (86, 88, 96, 98) aufweist und/oder dass insbesondere die Auswölbung des Montagekörpers (32) durch die voneinander weg verlaufenden Sicken oder Umkantungen (86, 88, 96, 98) von mindestens einem, oder beiden Formteile (72, 74) gebildet ist, und/oder dass insbesondere mindestens eines, insbesondere beide Formteile in dem jeweiligen Versteifungsbereich (66, 68) im Querschnitt mindestens eine, insbesondere mehrere, stufenförmige Verprägungen (86, 88, 92, 94, 96, 98, 102, 104) des Flachmaterials aufweisen, dass insbesondere mindestens eine der stufenförmigen Verprägungen (86, 88, 92, 94, 96, 98, 102, 104) des Flachmaterials um den Montagebereich (62) umlaufend ausgebildet ist und/oder dass insbesondere sich mindestens eine der stufenförmigen Verprägungen des Flachmaterials nahe eines Außenbereichs (70, 71) des Montagekörpers (32) erstreckt.

15. Anhängekupplung nach einem der voranstehenden Ansprüche, **dadurch gekennzeichnet, dass** die Formteile (72, 74) in mindestens einem Versteifungsbereich (66, 68) aneinander anliegende Verbindungssegmente (112, 114, 116, 118 152) aufweisen, dass insbesondere die Formteile (72, 74) im Bereich der Verbindungssegmente (112, 114, 152) stoffschlüssig miteinander verbunden sind und/oder dass insbesondere die Formteile (72, 74) im Bereich der Verbindungssegmente (112, 114) formschlüssig miteinander verbunden sind.

16. Anhängekupplung nach einem der voranstehenden Ansprüche, **dadurch gekennzeichnet, dass** zur Bildung des jeweiligen Versteifungsbereichs (66) das Flachmaterial von mindestens einem der Formteile (72, 74) in dem jeweiligen Versteifungsbereich (66) zumindest bereichsweise in einem größeren Abstand von dem anderen der Formteile (72, 74) verläuft als in dem Montagebereich (62) und/oder dass insbesondere die Formteile (72, 74) in dem mindestens einen Versteifungsbereich (66) mindestens eine Umformung (86, 88, 96, 98, 102, 104) aufweisen, durch welche das Flachmaterial der Formteile (72, 74) im Versteifungsbereich (66) bereichsweise in einem größeren Abstand voneinander verläuft als im Montagebereich (62) und/oder dass insbesondere die Formteile (72, 74) im Versteifungsbereich (64) Umformungen (86, 88, 96, 98) aufweisen, die dazu führen, dass das Flachmaterial mindestens eines der Formteile (72, 74) sich vom Flachmaterial des anderen der Formteile (74, 72) zumindest bereichsweise zunehmend entfernt.

17. Anhängekupplung nach einem der voranstehenden Ansprüche, **dadurch gekennzeichnet, dass** die Formteile (72, 74) auf einer dem Querträger (34) gegenüberliegenden Seite mindestens ein Verbindungssegment (152) aufweisen, durch welches die Formteile (72, 74) fest miteinander verbunden sind.

18. Anhängekupplung nach einem der voranstehenden Ansprüche, **dadurch gekennzeichnet, dass** der Montagekörper (32) auf einer zwischen Versteifungsbereichen (66) liegenden Seite Halteflansche (144, 146) zur Verbindung mit dem Querträger (34) der Anhängekupplung aufweist.

19. Anhängekupplung nach einem der voranstehenden Ansprüche, **dadurch gekennzeichnet, dass** die Formteile (72, 74) in dem Montagebereich (62) mit Abstand relativ zueinander angeordnet sind, dass insbesondere die Formteile (72, 74) in den Montagebereichen (62) durch zwischen diesen wirkende Abstützelemente (182) im Abstand voneinander verlaufend gehalten sind, dass insbesondere in den Montagebereichen (62) die Abstützelemente (182) in einem Zwischenraum zwischen den Formteilen (72, 74) angeordnet sind und die Formteile (72, 74) relativ zueinander abstützen, dass insbesondere die Abstützelemente (182) einzelne Körper sind, die sich von einem Formteil (72,74) zum anderen erstrecken, dass insbesondere die Abstützelemente (182) aus Flachmaterial gebildete übereinanderliegende plattenförmige Elemente (184) sind, dass insbesondere die Abstützelemente (182) als um den Durchlass (56) herum geschlossen verlaufende Ringkörper ausgebildet sind, dass insbesondere die Abstützelemente (182) eine mit dem Durchlass (56) deckungsgleiche Ausnehmung aufweisen.
